# EUROPEAN PATENT APPLICATION

(11) **EP 3 246 855 A1**
(43) Date of publication of application: **22.11.2017**
(21) Application number: 17171187.2
(22) Date of filing: 15.05.2017
(51) Int. Cl.: G06N 5/02, G06N 99/00

(54) **KNOWLEDGE PROCESS MODELING AND AUTOMATION**

(30) Priority: 15.05.2016 US 201615155033
(71) Applicant: Ahuja-Cogny, Shruti, New York, NY 10005 (US)
(72) Inventor: AHUJA-COGNY, Shruti, New York, NY 10005 (US); COGNY, Adrien, Brooklyn, NY 11201 (US)
(74) Representative: Fennell, Gareth Charles

(57) **Abstract**

A method for automating knowledge-based processes and operations includes a computer receiving an information dataset comprising knowledge and organizing the information dataset into a plurality of information elements. The computer maps the plurality of information elements into knowledge processes expressed in a knowledge process modeling language. Then, the computer converts the knowledge processes into a knowledge process executable language. Alternatively (or additionally), the computer translates the knowledge processes in a business process model language and converts the translated knowledge processes into a business process executable language.

## Description

### TECHNICAL FIELD

The present disclosure relates generally to methods, systems, and apparatuses for modeling and automating knowledge processes using computing systems.

### BACKGROUND

Business Process Modeling (BPM) refers to the representation of processes of an enterprise, with the goal of improving business operations. One benefit of BPM is that it can lead to automation of the processes (e.g., via executable code), thereby providing the enterprise with more efficient operations. To date, the field of BPM has not been able to cater to knowledge-based professions and processes due to the complexity of automating knowledge and human intelligence.

Artificial Intelligence (AI), which focuses more on the study of human intelligence and computing, is vast and at a nascent stage. It has focused largely on (i) solutions where intelligence is based on large data sets collected to develop a machine intelligence, (ii) on expert systems which focus on automating knowledge-based areas but rely on the manual collection of knowledge, generally introduced into shell systems for automation of *specific* processes, and (iii) on natural language processing (which also uses big data machine learning and/or semantics and other language based approaches).

None of the above BPM or AI approaches provides a modeling solution for knowledge-based activities and their processes, which are often based on small sets of more custom data, and/or deal with complex and expert knowledge which is specific to each process. Knowledge processes remain therefore difficult to model and fully automate from knowledge collection to its usage (e.g., providing legal advice, medical diagnostics, etc.)

### SUMMARY

Embodiments of the present invention address and overcome one or more of the above shortcomings and drawbacks, by providing methods, systems, and apparatuses related to a knowledge process modeling and automation tool which enables end-to-end and full scope automation of various knowledge-related work and other knowledge-intensive operations. The proposed technology extends the general ideas of business process modeling to the domain of knowledge processes in order to provide for expertise sharing and work performance in the knowledge-based space. This technology also, in some embodiments, develops a specific knowledge process modeling language and a computer executable knowledge process language for such expertise sharing and work performance. Further, in some embodiments, the technology builds a specific kind of AI especially adapted to the field of knowledge processes and operations, due to the high level of structuring and logic in business related thought processes and the rigorous construction of knowledge processes, which can lead to decision making algorithms. The proposed technology applies to knowledge processes in the business and professional environments and is described within these environments. Additionally, it may also apply to knowledge activities in non-business environments as it caters to all knowledge based operations and their processes.

According to some embodiments, a method for automating knowledge-based processes and operations includes a computer receiving an information dataset comprising knowledge and organizing the information dataset into a plurality of information elements. The computer maps the plurality of information elements into knowledge processes expressed in a knowledge process modeling language. Then, the computer converts the knowledge processes into a knowledge process executable language. Alternatively (or additionally), the computer translates the knowledge processes in a business process model language and converts the translated knowledge processes into a business process executable language. In some embodiments, the computer also uses the business process executable language or the knowledge process executable language to automate one or more knowledge-based processes.

The information dataset used in the aforementioned method may comprise, for example, a document or text and the information elements may comprise document or text elements. In some embodiments, the computer receives a voice dictation comprising the knowledge and automatically transcribes the voice dictation into the information dataset. In other embodiments, at least a portion of the knowledge is extracted from one or more e-mail or social media data feeds.

In some embodiments, the information dataset is organized into information elements by determining a domain corresponding to the information dataset and identifying the information elements based on domain-specific semantic knowledge structures. These domain-specific semantic knowledge structures may correspond to, for example, (i) a word, symbol, or phrase associated with the domain or a natural language associated with the domain; (ii) a font or a style of formatting associated with the domain; and/or (iii) a numbering or notation style associated with the domain.

Some embodiments of the aforementioned method apply machine learning techniques during processing. For example, in one embodiment, a trained machine learning model is used to automatically perform the mapping of the plurality of information elements into the knowledge processes using the knowledge process modeling language. In another embodiment, a trained machine learning model is used to automatically perform the translation of the knowledge processes in the business process modeling language.

According to other embodiments, an article of manufacture for automating knowledge-based processes and operations comprises a non-transitory, tangible computer-readable medium holding computer-executable instructions for performing the aforementioned method, with or without the additional features set out above.

According to other embodiments, a system for automating knowledge-based processes and operations comprises a knowledge user interface and a knowledge processing computer. The knowledge user interface is configured to receive an information dataset comprising expertise-related knowledge. The knowledge processing computer is configured to organize an information dataset comprising knowledge into a plurality of information elements and map the plurality of information elements into knowledge processes expressed in a knowledge process modeling language. Additionally, the knowledge processing computer is configured to perform one or more of (i) converting the knowledge processes into a knowledge process executable language or (ii) translating the knowledge processes in a business process model language and converting the translated knowledge processes into a business process executable language. In some embodiments, the knowledge processing computer is further configured to use the business process executable language or the knowledge process executable language to automate one or more knowledge-based processes.

Additional features and advantages of the invention will be made apparent from the following detailed description of illustrative embodiments that proceeds with reference to the accompanying drawings.

### BRIEF DESCRIPTION OF THE DRAWINGS

FIG. 1 provides an overview of a system for automating knowledge processes, according to some embodiments;
FIG. 2 provides an example process for converting knowledge processes in documents into computer executable operations, according to some embodiments;
FIG. 3A provides a portion of an example document that may be received and processed using the techniques described herein;
FIG. 3B shows an example of information elements generated based on the document in FIG. 3A;
FIG. 3C shows an example mapping performed using the information elements shown in FIG. 3B;
FIGS. 3D shows a first view BPMN generated using the KPML shown in FIG. 3C, according to some embodiments;
FIGS. 3E shows a second view BPMN generated using the KPML shown in FIG. 3C, according to some embodiments;
FIGS. 3F shows a third view BPMN generated using the KPML shown in FIG. 3C, according to some embodiments;
FIGS. 3G shows a fourth view BPMN generated using the KPML shown in FIG. 3C, according to some embodiments;
FIG. 4A provides an example of KPML processes and sub-processes that may be employed in different embodiments of the present invention;
FIG. 4B provides an example business process flow and its later conversion into a knowledge operation based on standard BPMN processes;
FIG. 5A provides an example of the knowledge process automation procedure, as it may be implemented in different embodiments;
FIG. 5B provides an alternative example of the knowledge process automation procedure, as it may be implemented in some embodiments;
FIG. 6A provides examples of graphical user interfaces that may be utilized to display information about a knowledge process extracted from documents, according to some embodiments;
FIG. 6B provides an additional example of a graphical user interface that may be used in some embodiments;
FIG. 7 provides an example of a full transformation from knowledge document to knowledge process performance, as may be performed in some embodiments;
FIG. 8 illustrates a thin client computing environment in which embodiments of the present invention may be implemented; and
FIG. 9 illustrates an exemplary computing environment within which embodiments of the invention may be implemented.

### DETAILED DESCRIPTION

The following disclosure describes the present invention according to several embodiments directed at methods, systems, and apparatuses related to a Knowledge Process Automation Workbench (the "Workbench") which enables the end-to-end and full scope automation of knowledge-related work, from knowledge collection and processing to work performance. Additionally, in some embodiments, knowledge-based operations may be automatically performed through a Knowledge Process Building Platform (the "Platform") which leverages data from the Workbench and enables the performance of the knowledge-based work by the end-user (i.e., client). Briefly, in some embodiments discussed herein, knowledge processes are extracted from documents or input (e.g., automatically, through a kind of AI for knowledge processes, manually, and/or through machine learning techniques). A knowledge process modeling language (KPML) is then applied which, in some embodiments, is enhanced with machine learning for more accurate language information use. Next, the KPML is converted to a Knowledge Process Executable Language (KPEL). Alternatively (or additionally), the KPML is converted into Business Process Modeling Notation (BPMN) (or other business process modeling languages) and transformed into a Business Process Execution Language (BPEL) (or other conventional machine executable language). Thus, a knowledge process can be executed and analyzed on server systems customized for knowledge-based operations (using KPEL) or classic IT business platforms (using BPEL).

The techniques described herein bring automation to professional activities which are currently highly manual due to their knowledge-intensive environments, for the benefit of the end-user and the quality and efficiency of work performance for professionals in the knowledge-based spaces. These techniques can automate all kinds of knowledge processes beyond just specific business operations. Rather, knowledge-based operations are automatically translated into a technology product, from the structured presentation of knowledge and expertise and the understanding of the process to the actual execution of the knowledge process. The techniques described herein may be used to create a master technology tool for all knowledge processes, encompassing knowledge processes' creation and performance. Moreover, these techniques add to conventional BPMN standardized process building by developing a modeling language, herein referred to as KPML, which is particular to knowledge-based content and which enables transformation into a specialized machine executable language for automation of knowledge-based operations.

Additionally, in some embodiments, the techniques described herein include the development of server-based systems which enable automated coding of the knowledge processes through a Knowledge Process Executable Language (KPEL). A kind of business AI is developed based on knowledge-based business thought processes and logic for knowledge processes. This business AI is not based on the aggregation of very large amounts of data for analysis (as is generally the case in AI) and natural language processing, but rather, on the precision of the logical structure of knowledge processes and its use in these knowledge processes (akin to a mathematics-like structured language), and a detailed identification of the structure of that logic for use in building knowledge processes. Machine learning can, in addition, be applied to this approach for enhanced results.

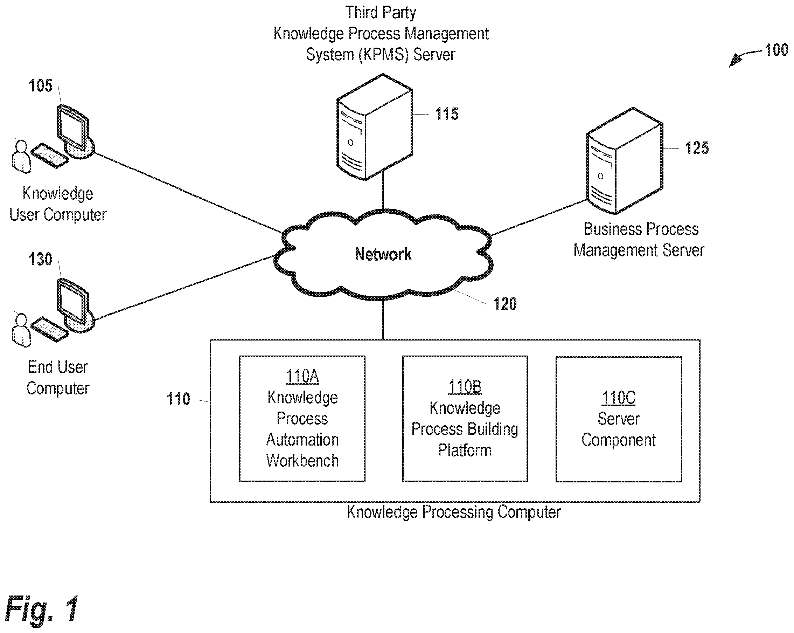

FIG. 1 provides an overview of a system 100 for automating knowledge processes, according to some embodiments. The system 100 includes three principle components: a Knowledge User Computer 105, a Knowledge Processing Computer 110, and an End User Computer 130. Two additional optional computing devices are shown: a Business Process Management Server 125 and a Knowledge Process Management System Server 115. These two Servers 115, 125 may be operated by the same entity as operates the Knowledge Processing Computer 110 or, alternatively, the Servers 115, 125 may be operated by third parties. Each computing device included in system 100 is connected via a Network 120. This network may be any computing network generally known in the art including, without limitation, the Internet.

In FIG. 1, a knowledge user accesses the Knowledge Processing Computer 110 via a Knowledge User Computer 105 in order to upload documents and other information to the Knowledge Processing Computer 110, as well as to view and use extracted knowledge processes. The Knowledge User Computer 105 can be any computing device generally known in the art capable of accessing a remote computing resource. For example, Knowledge User Computer 105 may be a desktop computer, a smart phone, or a tablet computing device.

An end user of the system 100 may use an End User Computer 130 to access the Knowledge Processing Computer 110 to view and use extracted knowledge processes. The End User Computer 130 can be any computing device generally known in the art capable of accessing a remote computing resource. For example, the End User Computer 130 may be a desktop computer, a smart phone, or a tablet computing device.

The exact technique for accessing the Knowledge Processing Computer 110 may vary according to different embodiments. For example, if the Knowledge Processing Computer 110 provides Software as a Server (SaaS) type interface, the Knowledge User Computer 105 and/or the End User Computer 130 may employ a web browser to access the Knowledge Processing Computer 110. Alternatively, in embodiments where the Knowledge User Computer 105 and/or the End User Computer 130 is smartphone or a tablet computing device, the Knowledge User Computer 105 and/or the End User Computer 130 may use a specialized app which provides an interface to the Knowledge Processing Computer 110.

Additionally, the exact technique that the Knowledge User Computer 105 utilizes to send documents or other information to the Knowledge Processing Computer 110 may vary. For example, in some embodiments, a graphical user interface (e.g., webpage) may be provided which allows knowledge users to directly upload documents to a server for processing and/or collaboration. In other embodiments, knowledge users can email the documents to that server (e.g., by including the server as a blind carbon copy recipient when emailing a client or colleague). Additionally, in some embodiments, a program may be utilized to perform a bulk analysis on a large set of documents or other data items. For example, a "crawler" program may be utilized to seek out and process all documents stored on the Knowledge User Computer 105. Moreover, if the Knowledge User Computer 105 is part of a network of computers for a particular organization (e.g., a law firm), the Knowledge Processing Computer 110 can process documents across the collective storage system utilized by the organization.

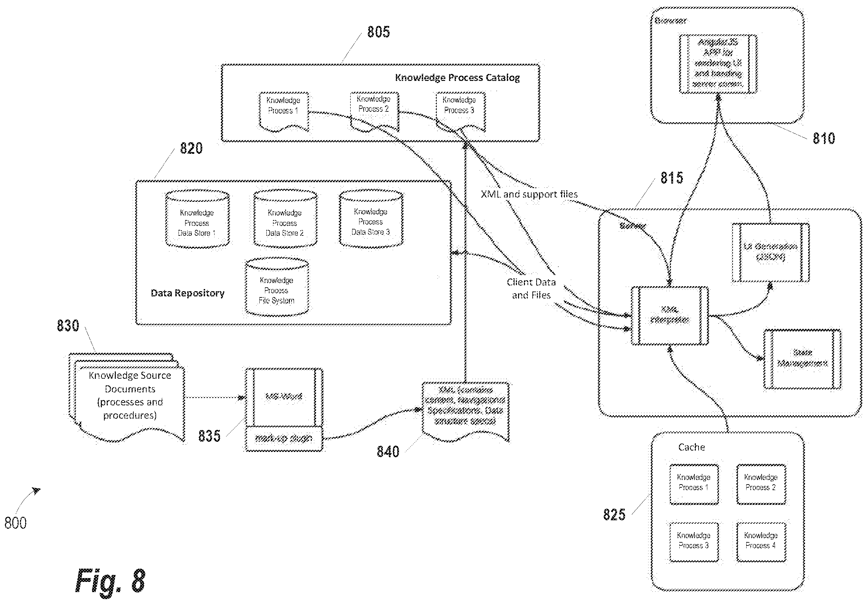

In the example of FIG. 1, the Knowledge Processing Computer 110 is a computer which is configured to extract knowledge processes from documents and information provided by Knowledge Users. As noted above, there are various ways that knowledge users can access the Knowledge Processing Computer 110 and similarly the exact architecture of the Knowledge Processing Computer 110 may vary. In FIG. 1, the Knowledge Processing Computer 110 includes a Server Component 110C which provides functionality for tasks such as receiving and responding to user requests. One example of an architecture that may be used to implement the Server Component 110C is shown in FIG. 8. The Knowledge Processing Computer 110 includes two additional components which are related to the processing of knowledge operations: a Knowledge Process Automation Workbench 110A and a Knowledge Process Building Platform 110B. These components 110A, 110B are collections of software elements (e.g., methods, classes, or routines) that provide certain processing functionality, as described in greater detail below.

The Knowledge Process Automation Workbench 110A is configured to provide tools for automated knowledge processes, collection, and organization. In conventional systems, knowledge processes have been processed manually, with professionals sharing their expertise (which can be later translated into automated processes for a specific work or incorporated into expert systems). The Knowledge Process Automation Workbench 110A automates and enhances conventional techniques by collecting, organizing, segregating and qualifying knowledge processes based on such professionals' thought processes as they are presented in their work. It is the logical structure of the language and the thought process which is identified as well as, in some cases, the words themselves and their interpretation. For example, a question starting with "should" or "may" does not have the same implication from an operational perspective. One is a compulsory step, while the other is a recommended step. Additional natural language processing and machine learning can be applied for further refinement and understanding of the texts for extraction and organization. A graphical user interface (GUI) may also be added to refine further the results of the extraction and the qualification of the knowledge processes.

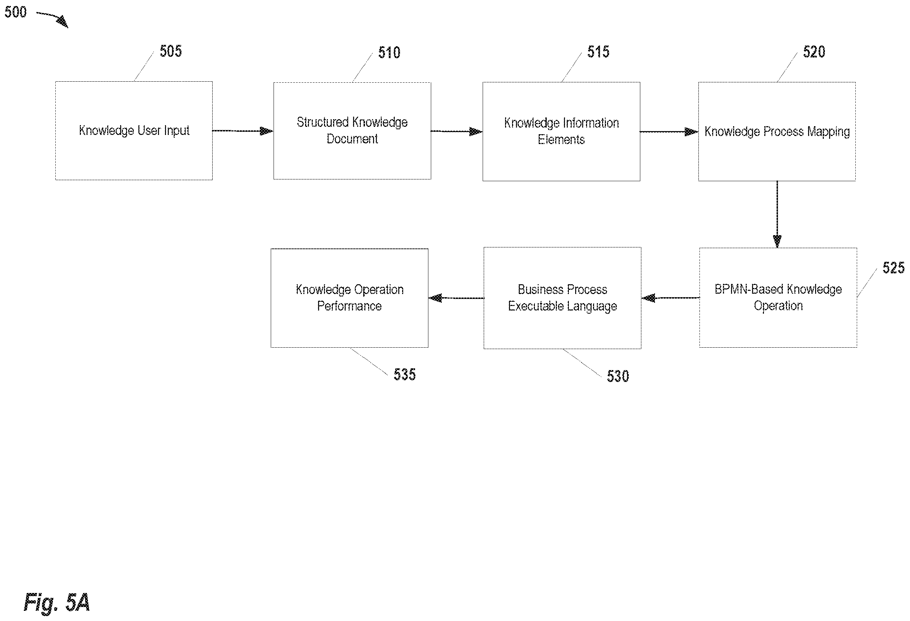

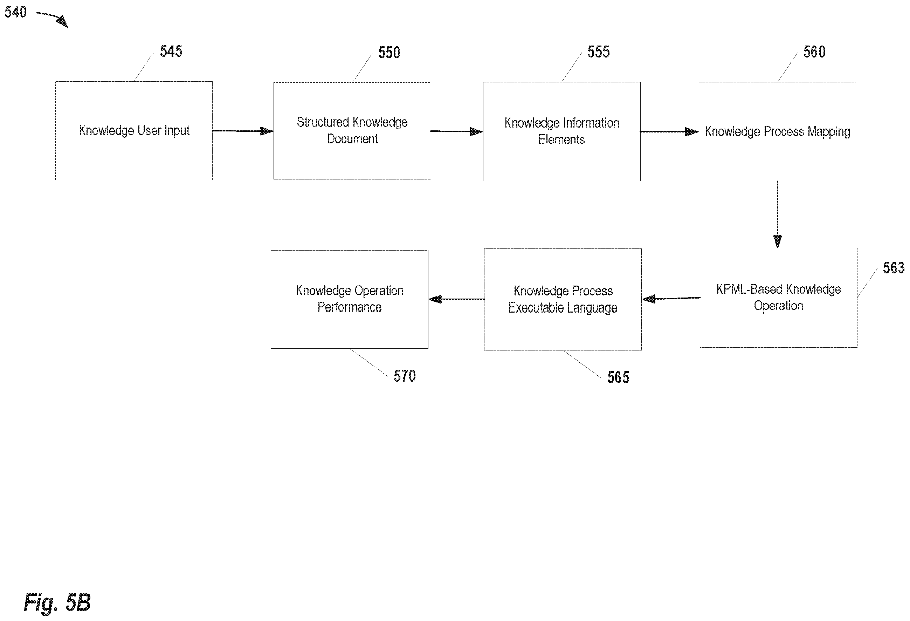

The Knowledge Process Automation Workbench 110A also transforms knowledge processes into dynamic operations through KPML. In conventional systems, the business world has focused on the business process modeling languages especially through the Unified Modeling Language (UML) and BPMN notations. The KPML described herein focuses on knowledge processes not from a business process perspective, but from a knowledge process perspective. By structuring a language for the knowledge space based on conventional business process languages, knowledge processes can be transformed into a computer executable language on existing IT platforms. The Knowledge Process Automation Workbench 110A facilitates the transformation of the knowledge processes' information elements resulting from the first phase (knowledge extraction and organization) into a dynamic mapping based on KPML language. This process is further described below with reference to FIGS. 5A and 5B.

The Knowledge Process Building Platform 110B is configured to utilize the Knowledge Process Automation Workbench 110A to process different knowledge processes. In conventional systems, knowledge and expertise in the performance of a specific process is manually collected and understood from an operations perspective before being translated into a technology-based specific operation (e.g., bankruptcy procedure, trademark filing, etc.). Based on data from the Knowledge Process Automation Workbench 110A, the Knowledge Process Building Platform 110B enables knowledge processes for any specific knowledge-based operation to be converted into a knowledge process and, by applying KPML, the knowledge may be transformed into a dynamic knowledge-based operation.

In some embodiments, the Knowledge Process Building Platform 110B links the KPML language with the classic BPMN language (or other business process modeling languages) which has been built for business processes. For example in some embodiments, the KPML is compatible with BPMN, while in other embodiments a customized translation tool is used to perform the translation between KPML and BPMN. BPMN language is then converted into BPEL (or other conventional executable languages for BPMN) which are machine readable. The end result is a knowledge-based operation which can be transformed into a machine executable language and enable traditional business process platforms to be enriched and used for knowledge processes automation and execution. For example, in FIG. 1, a Business Process Management Server 125 is shown. This Business Process Management Server 125 may use BPEL generated by the Knowledge Processing Computer 110 to perform knowledge process associated tasks as well as larger business process tasks such as, for example and without limitation, modeling (e.g., performing "what if" analyses), execution (e.g., automating the gathering of client information relevant to a particular topic), monitoring (e.g., the tracking of individual processes), and optimization (e.g., identifying bottlenecks in knowledge processes). In some embodiments, the conversion to BPEL can be done on Business Process Management Server 125.

In some embodiments, as an alternative or supplement to processing at the Business Process Management Server 125, the KPML language is converted to a Knowledge Process Executable Language (KPEL) which is machine executable. This KPEL may then be processed on a Knowledge Process Management System Server 115 which includes functionality specifically directed at knowledge processes. The conversion between KPML to KPEL may be performed, for example, by the Knowledge Process Building Platform 110B or the Server Component 110C prior to transmitting to the Knowledge Process Management System Server 115. Alternatively, the Knowledge Process Building Platform 110B may transfer KPEL to the Knowledge Process Management System Server 115 for conversion. In some embodiments, the KPEL is adapted and used to create a software application for a specific platform such as, for example, Microsoft Azure or Salesforce. Additionally, the KPEL may be adapted to utilize specific features available on the platform. For example, Microsoft's platform may provide interfaces for retrieving text and other data from files in Microsoft-based file formats.

Additionally, although the example described in FIG. 1 references documents, it should be understood that the general concept can be extended to any type of knowledge information. Thus, aside from documents generated by programs such as Microsoft Word®, the documents uploaded by the user may alternatively (or additionally) be in the form of emails, text messages, rich text formats, etc. Additionally, in some embodiments, the knowledge processes can even be uploaded in the form of an audio or video file (e.g., voice dictation). In this instance, the Knowledge Processing Computer 110 may be configured to transcribe information from the audio or file using techniques generally known in the art.

Moreover, although the user initiates the knowledge information transfer process in FIG. 1, in some embodiments, knowledge information may be culled from databases and other resources automatically. This general concept can even be extended to external resources controlled by other entities, provided that the data is accessible. For example, in some embodiments, the Knowledge Processing Computer 110 is configured to collect information published on one or more social media feeds (e.g., Facebook®, Twitter®, etc.) associated with the business. This information may then be processed in a manner similar to a document (as described above in FIG. 1), while taking into account the specific characteristics of the medium.

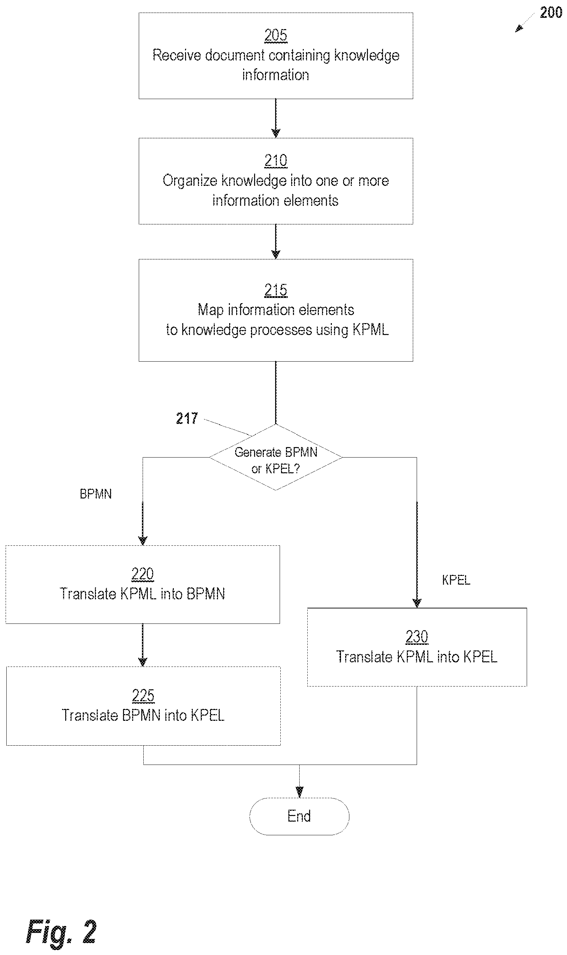

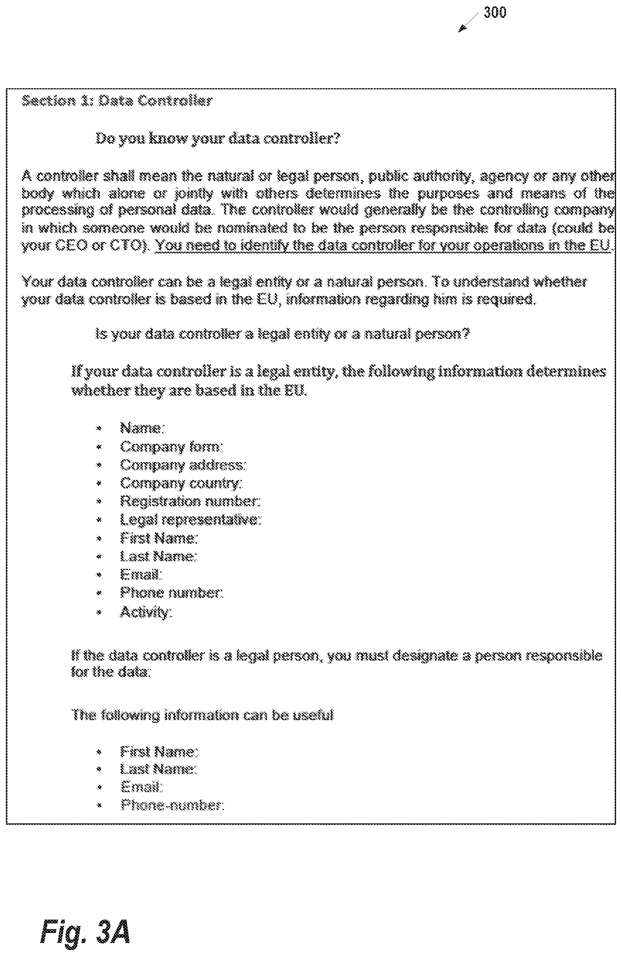

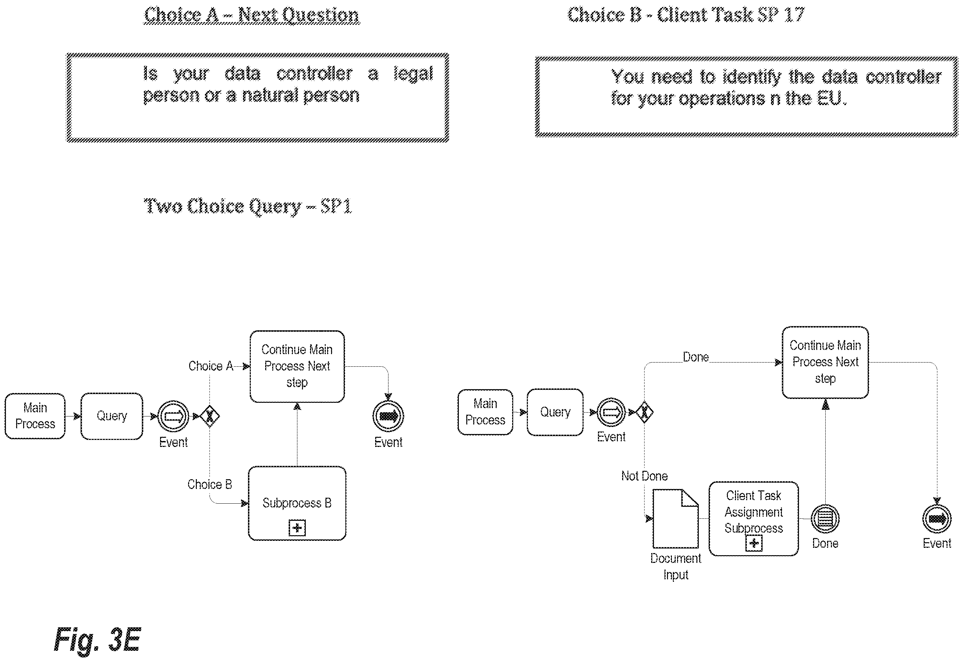

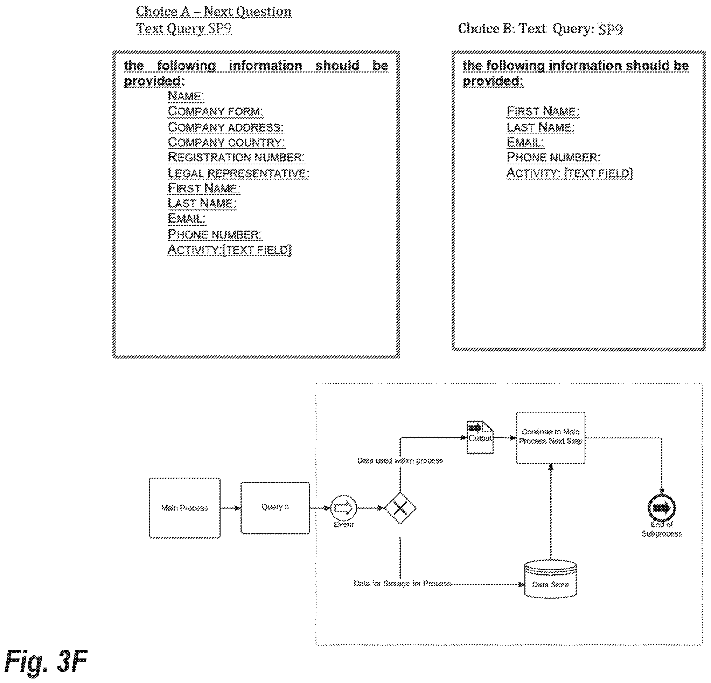

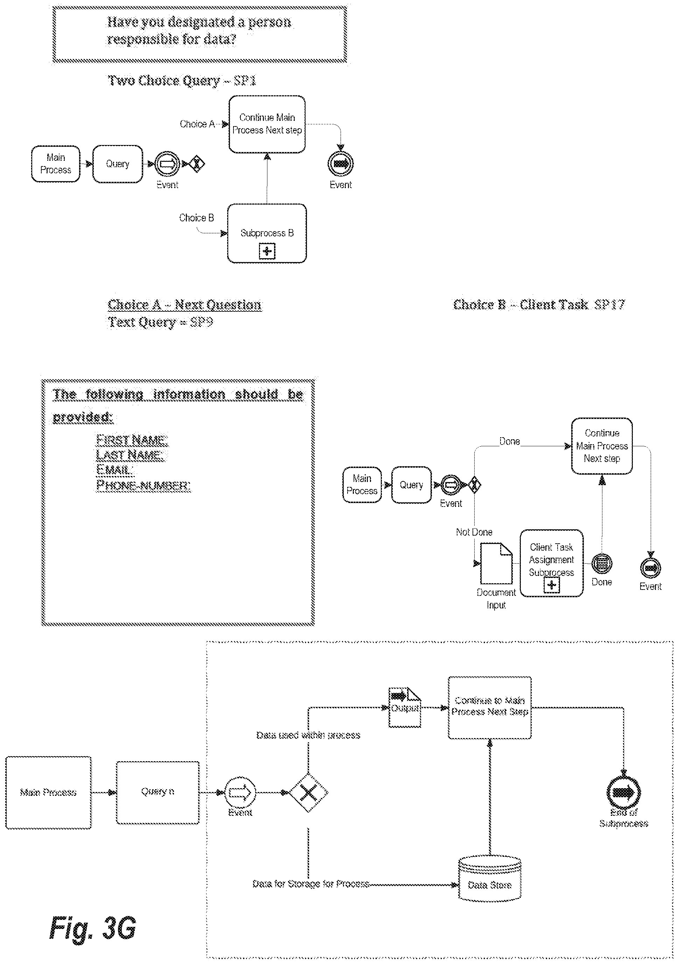

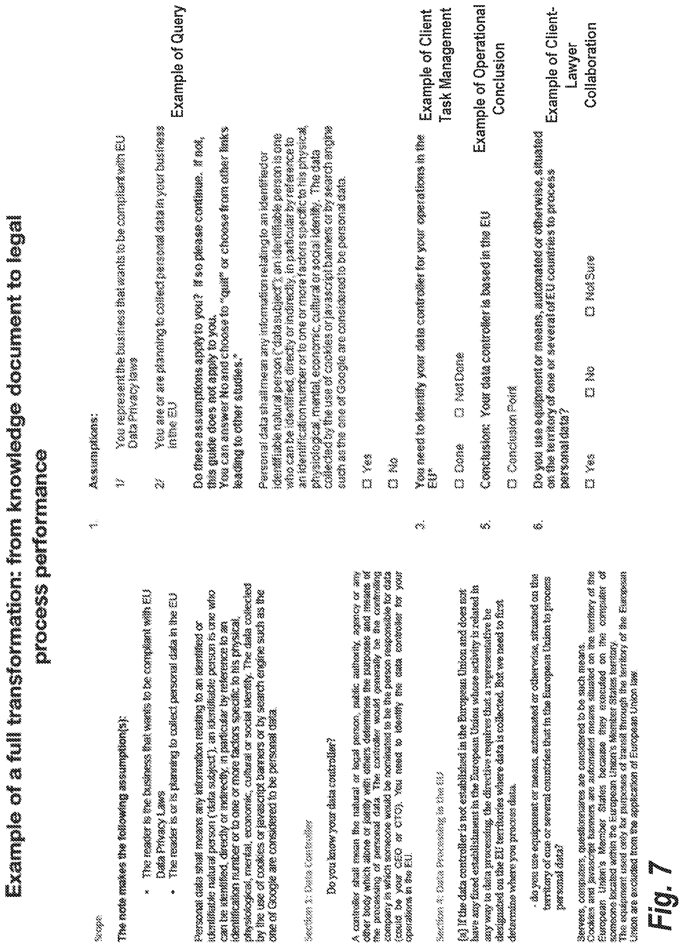

FIG. 2 provides an example process 200 for converting knowledge processes in documents into machine executable operations, according to some embodiments. Starting at step 205, one or more documents are received which contain knowledge information. These documents may be presented in various formats generally known in the art including, and without limitation, Microsoft Office ™ (e.g., .doc) formats, html, rich text formats, etc. The techniques for receiving the documents may vary according to different embodiments as described above with reference to FIG. 1. In some embodiments, the documents are either built upon or converted into structured documents (e.g., Microsoft Word rule based documents) to organize the document text in a manner that facilitates extraction in the later steps of the process 200. FIG. 3A provides a portion of an example document 300 that may be received at step 205 and processed using the techniques described herein. This document provides a description of compliance with European Union privacy obligations. Specifically, the document addresses basic questions about a controller. The term controller is defined and some basic information is provided to help a user understand the concept. Then a question is provided: "Is your data controller a legal entity or a natural person", (either in the form of a question as in the FIG 3A or in the form of a sentence from which a question is inferred). The question is followed by additional questions and instructions that depend on the user's response. Although question identification is a relatively trivial language processing task and presented here for simplicity, the processing described above may be generalized to more complex information structures as discussed below with reference to FIG. 7.

Returning to FIG. 2, at step 210, the knowledge information contained in the one or more documents is segregated and organized in information elements using automated tagging and extraction techniques coded for the purpose and based on a type of AI for knowledge processes. Notably, this process may be domain-specific (e.g., specific to the legal domain or the medical domain). For example, the document may be analyzed to detect domain-specific semantic knowledge structures specific to the domain such as known words, symbols, or other indicia of a particular type of text. The simplest example is using the detection of a question mark to designate a sentence as being a question. More complex combinations of words and symbols may also be used (e.g., using the phrase "you need to..." followed by a period to identify a task to be accomplished). In general, the document may be structured to follow domain-specific thought processes and their logic based step-by-step approach. The document also allows for identification of the kind of knowledge it contains: information, questions for which a professional working in the domain would require answers to draw conclusions and next steps, tasks a user would need to perform for a business operation.

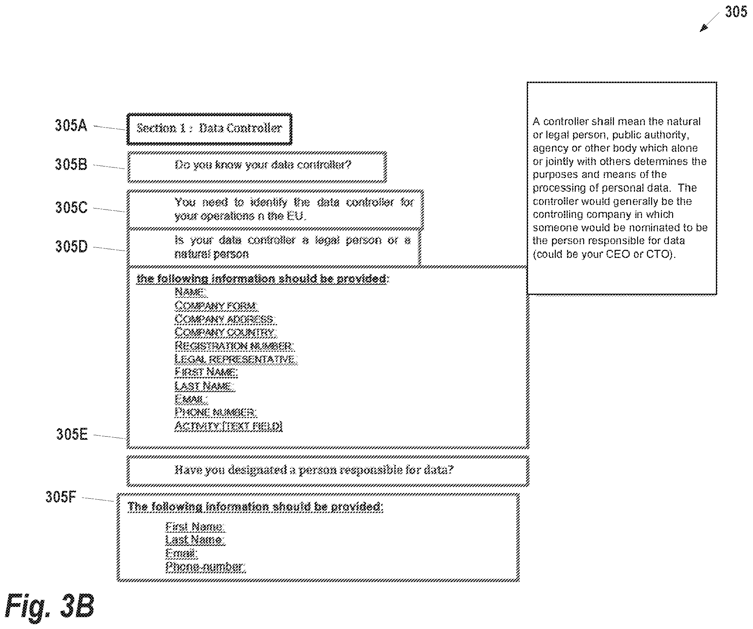

Specific fonts and formatting indicative of these specific kinds of text may also be used as the basis for domain-specific semantic knowledge structures. For example, a multiple answers question may take the form of bullet points or an important task to be performed may be presented in a sentence underlined in the body of a text. Once generated, the information elements may be presented visually, for example through a GUI, to allow for ease of use and validation processes (e.g., via drag and drop operations or as an automated presentation for validation). Based on the user's validation of the document, machine learning rules can be learned or updated to aid in the processing for additional documents and natural language processing can be used for refining the result. For example, FIG. 3B shows an example of information elements 305 generated based on the document 300 in FIG. 3A. In this example, six elements of knowledge processes have been identified: 305A, 305B, 305C, 305D, 305E, and 305F.

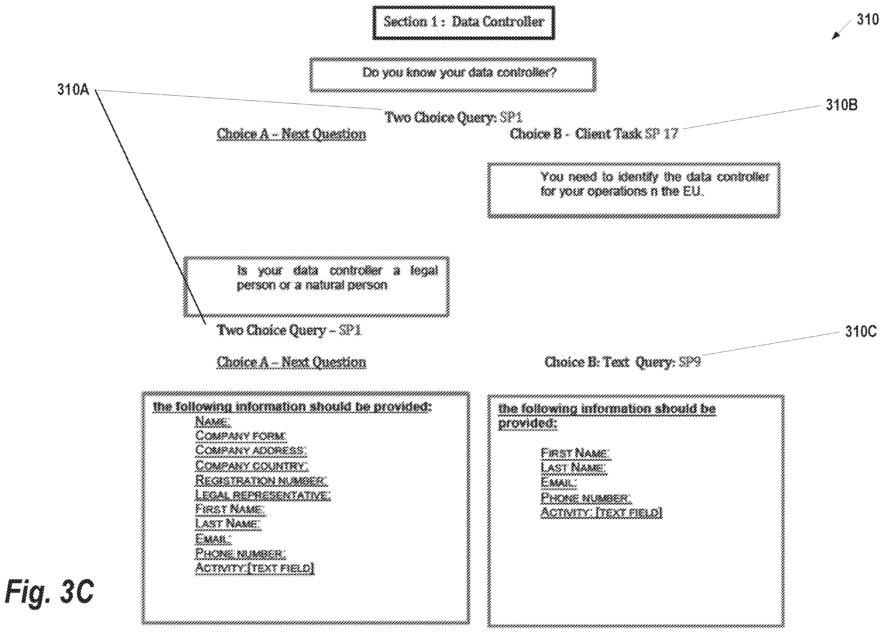

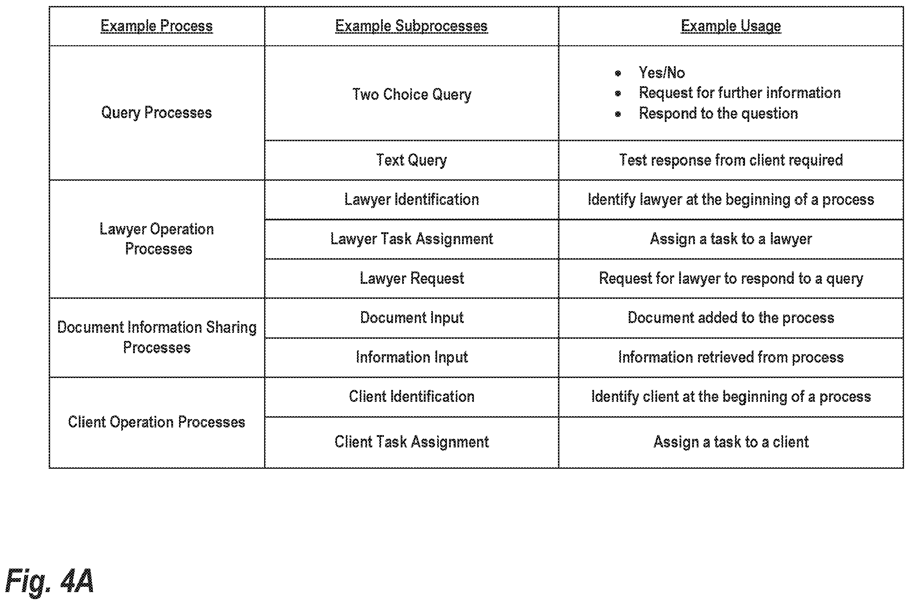

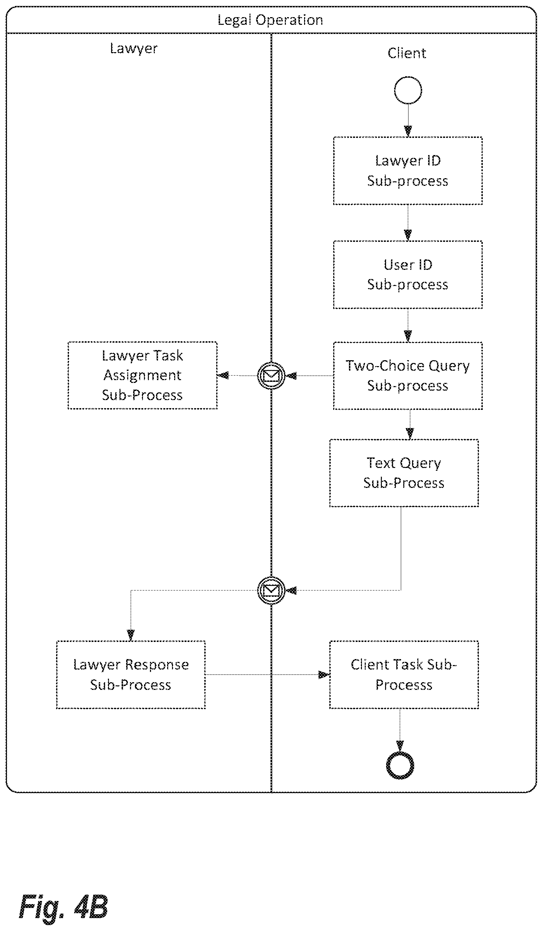

At step 215 in FIG. 2, the information elements are dynamically mapped to one or more knowledge processes. This is generally an automated process that creates links between different elements of the diagram for identifying and building knowledge processes. Additionally, in some embodiments, the dynamic mapping may be semi-automated if the information is not available in the initial document and needs to be added manually. The links in the mapping are based on KPML which, as described above, is a language developed for the purpose of knowledge processes standardization. In the simplest case, the links may be generated based on one or more semantic rules. For example, a statement ending in a question mark and containing the word "or" may be classified as two-choice query; while a statement with the phrase "you need to..." may be classified as a client task. In some embodiments, these basic semantic rules may be used by a machine learning model to allow more complicated links to be identified based on the semantic data in the information elements. In some embodiments, a GUI or other tools may be used to refine KPML to create customizations for the knowledge process. Any customizations presented by the user via the GUI may be used to further train the model and provide more refined links in future mapping applications. FIG. 3C shows an example mapping 310 performed using the information elements shown in FIG. 3B. In this case, 3 types of KPML sub-processes have been developed: Two Choice Query 310A, Client Task 310B, and Text Query 310C. Additional examples and details on KPML are provided in FIG. 4.

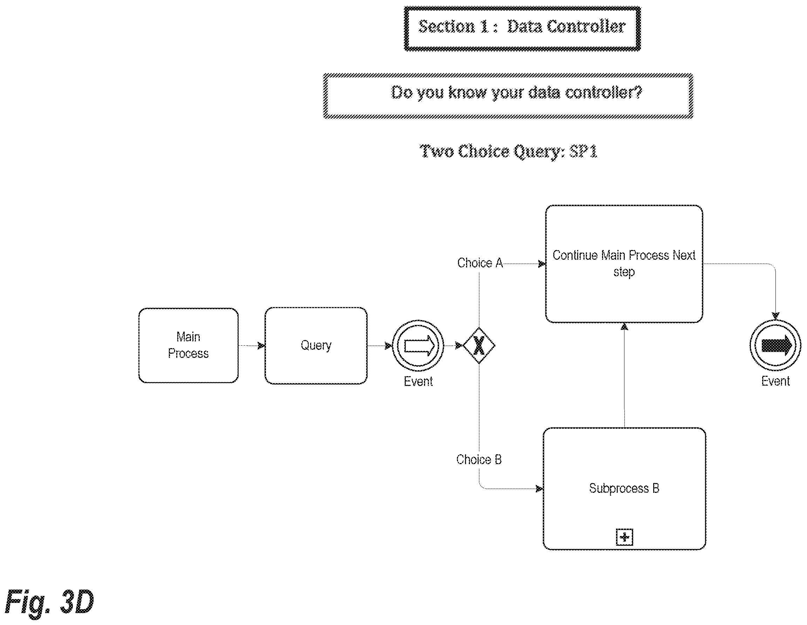

Returning to FIG. 2, at step 217, a selection is made between generating BPMN (or other business process modeling languages) or KPEL based on KPML. This selection may be performed, for example, by the user at runtime or using a pre-configured setting. If the BPMN option is selected, the KPML generated at step 215 is translated at step 220 into BPMN standard business sub-processes. This translation may be performed, for example, using a mapping between KPML and BPMN. FIGS. 3D - 3G show examples of BPMN generated using the KPML shown in FIG. 3C. Next at step, 225, one or more tools generally known in the art may then be used to convert the BPMN into BPEL or some other form of machine executable operations. Alternatively (or additionally), if the KPEL option is selected at step 217, the KPML generated at step 215 is translated into KPEL at step 230. The end result of the process 200 is an end-to-end and full scope automation tool for any knowledge-based operation or even any simple business operation, and a platform which enables automated knowledge-based work performance.

For further enhancement and automation, sub-processes can be developed. FIG. 4A provides an example of KPML processes and sub-processes that may be employed in different embodiments of the present invention. The example of FIG. 4A, along with other examples presented in this disclosure, illustrate application of the disclosed techniques in the context of legal knowledge. However, it should be understood that, in principle, the techniques described herein may be extended to any type of knowledge-generating workflow such as, for example, medical diagnostics or financial advice. Four basic processes are shown in FIG. 4B: query processes, lawyer operation processes, document information sharing processes, and client operation processes. These basic processes, and their related sub-processes, may be combined and linked together to form a complete process flow and are (i) translated into BPMN sub-processes and flow modeling and/or (ii) KPML based sub-processes and flow modeling, both options leading to their specific executable languages. For example, FIG. 4B provides an example process flow and its later conversion into a knowledge-based operation based on standard BPMN processes, some of which are illustrated in FIG. 4A.

FIG. 5A provides an example of the knowledge process automation procedure 500, as it may be implemented in different embodiments. Knowledge User Input 505 comprising knowledge information is provided by a knowledge user. This Knowledge User Input 505 is converted into a Structured Knowledge Document 510 (i.e., a document where the information is structured). Next, extraction is performed, for example, through specific coding and/or visual presentation. Additionally, the extraction may be enhanced with machine learning capabilities for refined presentation and understanding of extraction. The extraction results in Knowledge Information Elements 515. KPML is applied to the Knowledge Information Elements 515 to provide a Knowledge Process Mapping 520. In some embodiments, the application of KPML may be enhanced with machine learning for more accurate language information use. The KPML in the Knowledge Process Mapping 520 is converted into a BPMN-Based Knowledge Operation 525. The BPMN-Based Knowledge Operation 525 is converted by an IT platform (e.g., a conventional business process platform provided by Oracle, SAP, IBM, etc.) to BPEL 530. This BPEL 530 may then be used to perform an automated knowledge process for end-users, resulting in Knowledge Operation Performance 535.

The table below illustrates some categories of examples of knowledge operation performance that may be automated using the procedure 500:

| **Process** | **Knowledge Operation Performance** |
|---|---|
| **Legal recommendation** | Client decision to carry out a specific business operation based on lawyer knowledge and analysis |
| **Business operation** | Client business operation performance, for example, in the human resource domain |
| **Regulatory compliance** | Client validation of a regulatory compliance requirement |
| **Medical diagnostics** | Client identification of a potential disease or condition based on their symptoms and signs |
| **Business operation with interactive client task management** | Client led business operation performance |

For example, a regulatory compliance process would ordinarily require a manual review of knowledge and information pertaining to the process presented for example in a document, and a manual identification of one or several particular regulatory requirements which need to be complied with. A user would then need to manually check whether these regulatory requirements can be met by the organization and, if so, submit confirmation to the requesting party. By converting the process to KPEL, these steps may be entirely automated by automatically identifying the compliance requirements in the process presented in the document and structuring the process in a machine readable way such that they can either be clearly requested as a mandatory requirement to be carried out to ensure compliance or even be used in other tools to automatically query existing knowledge databases to confirm that the regulatory requirements can be met. Thus, the user is potentially eliminated from the process altogether. However, for some processes, it may be desirable for the user to provide some level of validation that the process is generating correct results before, as well as expertise validation of results.

FIG. 5B provides an alternative example of the process automation procedure 540, as it may be implemented in some embodiments. Items 545, 550, 555, and 560 are similar to items 505, 510, 515, and 520, respectively, of FIG. 5A. Thus, Knowledge User Input 545 is provided in the form of a structured word document. Alternatively, this Knowledge User Input 545 is converted into a Structured Knowledge Document 550 and extraction is performed to generate Knowledge Information Elements 555. KPML is applied to the Knowledge Information Elements 555 to provide a Knowledge Process Mapping 560. In contrast to FIG. 5A, in the example of FIG. 5B, KPML in the Knowledge Process Mapping 520 is converted into Knowledge Process Executable Language 565, resulting in a KPML-Based Knowledge Operation 563. This Knowledge Process Executable Language 565 may then be used to perform an automated knowledge-based process for users, resulting in a Knowledge Operation Performance 570. The categories of knowledge operation performances that may be generated using the procedure 540 in the business space are similar to those presented in the table above with respect to FIG. 5A.

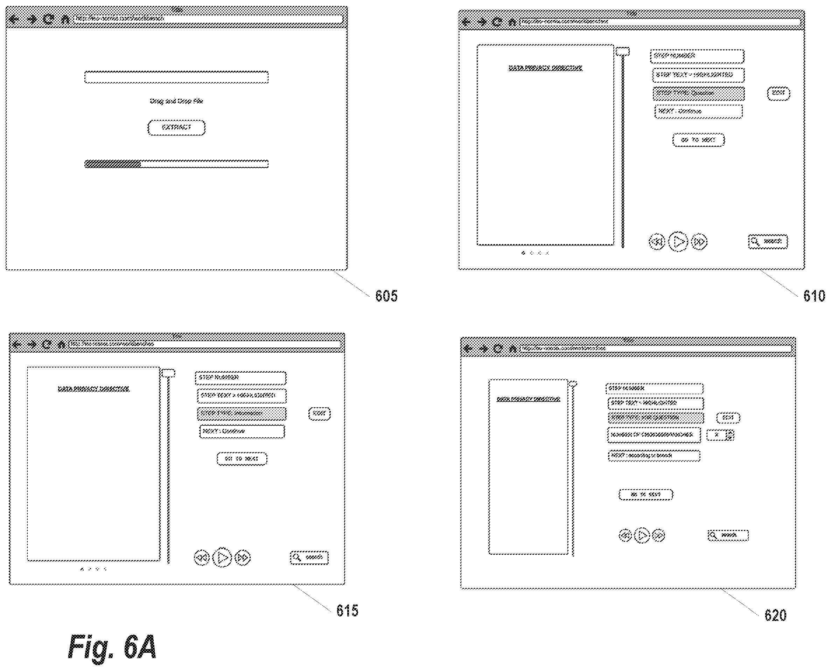

FIG. 6A provides example GUIs 605, 610, 615, 620 that may be employed in various embodiments for displaying relevant information regarding the knowledge process, as gathered and developed using the techniques discussed above with reference to FIGS. 1 - 5. These GUIs 605, 610, 615, 620 enable the visual validation of automated transformation from initial document to information elements and process mapping before final step of automated application of executable language and creation of the knowledge process for use by the end-user.

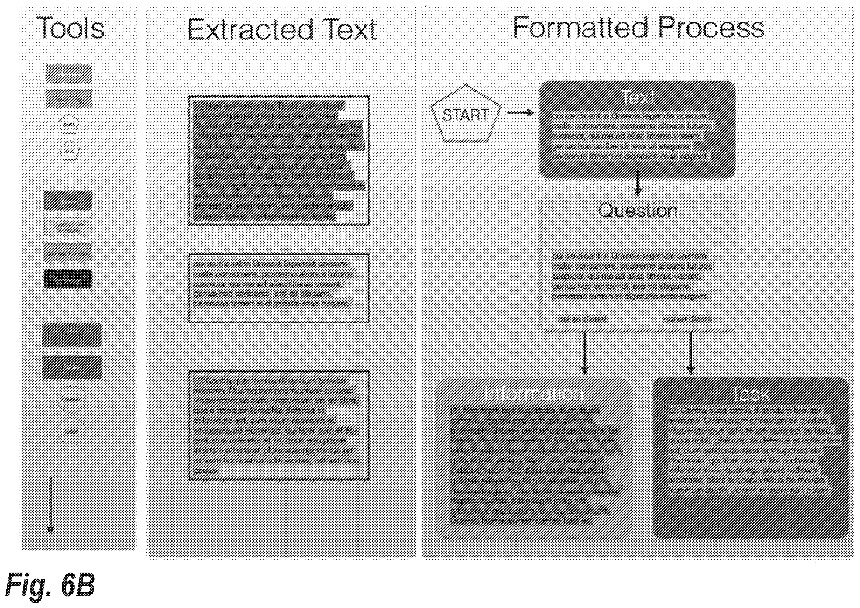

FIG. 6B provides an additional example of a GUI that may be utilized to display information about a knowledge process extracted from documents, according to some embodiments.

FIG. 7 provides an example of a full transformation from knowledge document to knowledge process performance, as may be performed using some of the techniques described herein. More specifically, this example shows the transformation of the knowledge processes document into an "app like" product and the final user-facing result of the whole operation transforming the document into a knowledge-based operation performing app.

The techniques described herein provide many benefits over conventional systems. For example, these techniques bring advanced automation to professions and activities which are highly manual due to the high level of knowledge work involved and allow these professions and activities to build efficiencies in their work. They benefit both the knowledge-users and professionals, and their clients and end-users looking for streamlined advice or performing knowledge based operations. Thus both the knowledge-users and professionals and the end-users can benefit from efficiencies through the automated creation of knowledge processes and their computer-based execution. Moreover, the techniques, as based on the actual business and professional environment work habits create automated machine executable operations without disrupting the professionals and knowledge-users work environment, enabling easy adoption by them. The techniques described herein are also easily adopted by clients and end-users as a stand-alone tool and platform or as integrated into the client's business environment, as they can link themselves to classic business process platforms (e.g., provided by Oracle or SAP) in order for the end-user and client to perform the automated knowledge processes. The end product for the final user/client is also extremely simple and easy to use as it can take the form of an application in a cloud environment or a software application on a user's device (e.g., a smartphone app) and can be built and accessed on traditional business apps platforms such as Microsoft Azure™, Force.com™, and Apple's CloudKit™.

The technology described herein provides techniques for moving from a document or other source of knowledge to an application without any technology requirement from any of the users (knowledge user or end user). This may be done in a seamless transition from the business or domain-specific environment and its natural medium (e.g., English) to the technology environment and back to the business or domain environment and its natural medium (e.g., English). Moreover, in contrast to conventional systems which require manual processing by users (e.g., at the information drafting and collection level), the technique described herein provides a fully automated system for maximum ease of use. Additionally, the technology described herein may be combined in an end product which comprises, for example, the application, collaboration platforms and tools, and project management capabilities. These various components may be integrated as a full product and/or connected to external platforms and solutions. Thus, for example, the disclosed technology can be used within classic business platforms such as Microsoft Azure™, Force.com™, and/or Apple's CloudKit™, as the modeling language allows to build processes independently of a specific proprietary system.

FIG. 8 illustrates, as one technique, a thin client computing environment 800 in which embodiments of the present invention may be implemented. In this example, a Knowledge Process Catalog 805 is generated with a plurality of knowledge processes. Each knowledge process enables the automation (e.g., via KPEL) of one or more domain-specific processes. For example, with respect to the domain of legal services, each knowledge process may be directed to the automation of a particular legal process.

Knowledge Source Documents 830 detailing various policies and procedures are processed in Microsoft Word™ using a mark-up plug-in 835 to generate Extensible Markup Language (XML) 840 comprising information such as content, navigational specifications, data structure specifications. The XML 840 is then used to update the Knowledge Process Catalog 805. In this example, the mark-up plug-in incorporates the functionality for identifying information elements in the Knowledge Source Documents 830. This may generally be performed by the plug-in 835 automatically although, in some embodiments, a user may manually supplement or modify the elements generated automatically with input provided to the plug-in 835. It should be noted that, although the example of FIG. 8 utilizes Microsoft Word™ and a mark-up plug-in 835, the general functionality described above may be incorporated into other form document processing tools, operating either within or outside editors such as Microsoft Word™.

An end user utilizes a Browser 810 to communicate with a Server 815 which, in turn, communicates with the Knowledge Process Catalog 805. The Server 815 receives client data and related files from the end user via the Browser 810 and stores this information in a local Data Repository 820. The client data is used in conjunction with knowledge process data from the Knowledge Process Catalog 805 to generate a response to the end user which is then present via the Browser 810. In the example of FIG. 8, the Browser 810 and Server 815 use JavaScript technologies for rendering the user interface (UI) and managing communications; however, it should be understood that other rendering and communication technologies providing similar functionality may be used in other embodiments. The thin client computing environment 800 further includes a Cache 825 which stores recently used expert systems in fast memory accessible to the Server 815, thereby allowing for faster response times to user requests. As new user requests are received and processed, this Cache 825 may be updated using any cache updating technique or algorithm generally known in the art (e.g., a least recently used algorithm).

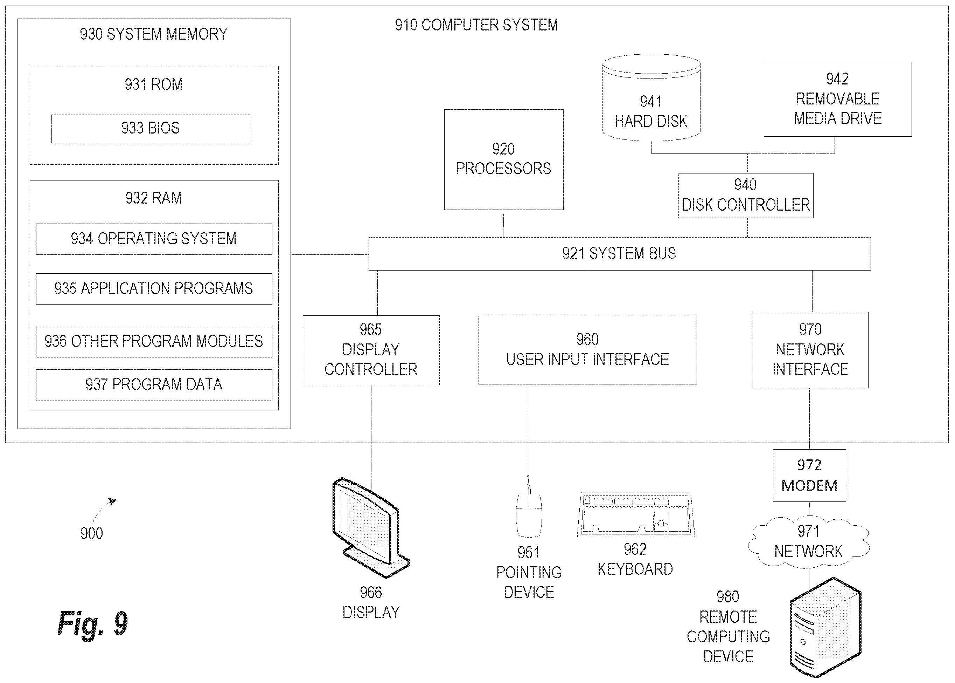

FIG. 9 illustrates an exemplary computing environment 900 within which embodiments of the invention may be implemented. For example, in some embodiments, the computing environment 900 may be used to implement one or more of the components illustrated in the system 100 of FIG. 1 or devices supporting the thin client computing environment 800 shown in FIG. 8. The computing environment 900 may include computer system 910, which is one example of a computing system upon which embodiments of the invention may be implemented. Computers and computing environments, such as computer system 910 and computing environment 900, are known to those of skill in the art and thus are described briefly here.

As shown in FIG. 9, the computer system 910 may include a communication mechanism such as a bus 921 or other communication mechanism for communicating information within the computer system 910. The computer system 910 further includes one or more processors 920 coupled with the bus 921 for processing the information. The processors 920 may include one or more central processing units (CPUs), graphical processing units (GPUs), or any other processor known in the art.

The computer system 910 also includes a system memory 930 coupled to the bus 921 for storing information and instructions to be executed by processors 920. The system memory 930 may include computer readable storage media in the form of volatile and/or nonvolatile memory, such as read only memory (ROM) 931 and/or random access memory (RAM) 932. The system memory RAM 932 may include other dynamic storage device(s) (e.g., dynamic RAM, static RAM, and synchronous DRAM). The system memory ROM 931 may include other static storage device(s) (e.g., programmable ROM, erasable PROM, and electrically erasable PROM). In addition, the system memory 930 may be used for storing temporary variables or other intermediate information during the execution of instructions by the processors 920. A basic input/output system (BIOS) 933 containing the basic routines that help to transfer information between elements within computer system 910, such as during start-up, may be stored in ROM 931. RAM 932 may contain data and/or program modules that are immediately accessible to and/or presently being operated on by the processors 920. System memory 930 may additionally include, for example, operating system 934, application programs 935, other program modules 936 and program data 937.

The computer system 910 also includes a disk controller 940 coupled to the bus 921 to control one or more storage devices for storing information and instructions, such as a hard disk 941 and a removable media drive 942 (e.g., floppy disk drive, compact disc drive, tape drive, and/or solid state drive). The storage devices may be added to the computer system 910 using an appropriate device interface (e.g., a small computer system interface (SCSI), integrated device electronics (IDE), Universal Serial Bus (USB), or FireWire).

The computer system 910 may also include a display controller 965 coupled to the bus 921 to control a display 966, such as a cathode ray tube (CRT) or liquid crystal display (LCD), for displaying information to a computer user. The computer system includes an input interface 960 and one or more input devices, such as a keyboard 962 and a pointing device 961, for interacting with a computer user and providing information to the processor 920. The pointing device 961, for example, may be a mouse, a trackball, or a pointing stick for communicating direction information and command selections to the processor 920 and for controlling cursor movement on the display 966. The display 966 may provide a touch screen interface which allows input to supplement or replace the communication of direction information and command selections by the pointing device 961.

The computer system 910 may perform a portion or all of the processing steps of embodiments of the invention in response to the processors 920 executing one or more sequences of one or more instructions contained in a memory, such as the system memory 930. Such instructions may be read into the system memory 930 from another computer readable medium, such as a hard disk 941 or a removable media drive 942. The hard disk 941 may contain one or more datastores and data files used by embodiments of the present invention. Datastore contents and data files may be encrypted to improve security. The processors 920 may also be employed in a multi-processing arrangement to execute the one or more sequences of instructions contained in system memory 930. In alternative embodiments, hard-wired circuitry may be used in place of or in combination with software instructions. Thus, embodiments are not limited to any specific combination of hardware circuitry and software.

As stated above, the computer system 910 may include at least one computer readable medium or memory for holding instructions programmed according to embodiments of the invention and for containing data structures, tables, records, or other data described herein. The term "computer readable medium" as used herein refers to any medium that participates in providing instructions to the processor 920 for execution. A computer readable medium may take many forms including, but not limited to, non-volatile media, volatile media, and transmission media. Non-limiting examples of non-volatile media include optical disks, solid state drives, magnetic disks, and magneto-optical disks, such as hard disk 941 or removable media drive 942. Non-limiting examples of volatile media include dynamic memory, such as system memory 930. Non-limiting examples of transmission media include coaxial cables, copper wire, and fiber optics, including the wires that make up the bus 921. Transmission media may also take the form of acoustic or light waves, such as those generated during radio wave and infrared data communications.

The computing environment 900 may further include the computer system 910 operating in a networked environment using logical connections to one or more remote computers, such as remote computer 980. Remote computer 980 may be a personal computer (laptop or desktop), a mobile device, a server, a router, a network PC, a peer device or other common network node, and typically includes many or all of the elements described above relative to computer system 910. When used in a networking environment, computer system 910 may include modem 972 for establishing communications over a network 971, such as the Internet. Modem 972 may be connected to bus 921 via user network interface 970, or via another appropriate mechanism.

Network 971 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 910 and other computers (e.g., remote computer 980). The network 971 may be wired, wireless or a combination thereof. Wired connections may be implemented using Ethernet, Universal Serial Bus (USB), RJ-11 or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 971.

The embodiments of the present disclosure may be implemented with any combination of hardware and software. In addition, the embodiments of the present disclosure may be included in an article of manufacture (e.g., one or more computer program products) having, for example, computer-readable, non-transitory media. The media has embodied therein, for instance, computer readable program code for providing and facilitating the mechanisms of the embodiments of the present disclosure. The article of manufacture can be included as part of a computer system or sold separately.

Embodiments of the present disclosure may be implemented using computer-executable instructions. A computer-readable medium may be provided comprising, e.g. storing, the computer-executable instructions. The computer-executable instructions, when executed by one or more computer systems, can perform any of the methods described herein.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device which displays the image for viewing by the user. The processor, under control of an executable procedure or executable application, manipulates the GUI display images in response to signals received from the input devices. In this way, the user may interact with the display image using the input devices, enabling user interaction with the processor or other device.

The functions and process steps herein may be performed automatically or wholly or partially in response to user command. An activity (including a step) performed automatically is performed in response to one or more executable instructions or device operation without user direct initiation of the activity.

The system and processes of the figures are not exclusive. Other systems, processes and menus may be derived without departing from the scope of the invention. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof.

## Claims

1. A method for automating knowledge-based processes and operations, the method comprising:
receiving, by a computer, an information dataset comprising knowledge;
organizing, by the computer, the information dataset into a plurality of information elements;
mapping, by the computer, the plurality of information elements into knowledge processes expressed in a knowledge process modeling language;
performing, by the computer, one or more of (i) converting the knowledge processes into a knowledge process executable language or (ii) translating the knowledge processes into a business process model language and converting the translated knowledge processes into a business process executable language.

2. The method of claim 1, wherein the information dataset comprises a document or text and the information elements comprise document or text elements.

3. The method of any preceding claim, further comprising:
receiving, by the computer, a voice dictation comprising the knowledge; and
automatically transcribing, by the computer, the voice dictation into the information dataset.

4. The method of claim 1, wherein receiving the information dataset comprises:
extracting at least a portion of the knowledge from one or more e-mail or social media data feeds.

5. The method of any preceding claim, wherein the information dataset is organized into information elements by:
determining a domain corresponding to the information dataset;
identifying the plurality of information elements in the information dataset based on a plurality of domain-specific semantic knowledge structures.

6. The method of claim 5, wherein each domain-specific semantic knowledge structure corresponds to at least one of a word, symbol, or phrase associated with the domain or a natural language associated with the domain.

7. The method of claim 5, wherein each domain-specific semantic knowledge structure corresponds to at least one of a font or style of formatting associated with the domain.

8. The method of claim 5, wherein each domain-specific semantic knowledge structure corresponds to at least one of a numbering or notation style associated with the domain.

9. The method of any preceding claim, wherein a trained machine learning model is used to automatically perform the mapping of the plurality of information elements into the knowledge processes using the knowledge process modeling language.

10. The method of any preceding claim , wherein a trained machine learning model is used to automatically perform the translation of the knowledge processes into the business process model language.

11. The method any preceding claim, further comprising:
using the business process executable language or the knowledge process executable language to automate one or more knowledge-based processes.

12. A computer-readable medium comprising computer-executable instructions for performing the method of any of claims 1 to 11.

13. A system for automating knowledge-based processes and operations, the system comprising:
a knowledge user interface configured to receive an information dataset comprising expertise-related knowledge;
a knowledge processing computer comprising computer-executable instructions for performing the method of any of claims 1 to 11.

14. The system of claim 13, wherein the knowledge processing computer is further configured to use the business process executable language or the knowledge process executable language to automate one or more knowledge-based processes.
